(19) Europäisches Patentamt
European Patent Office
Office européen des brevets

(11) **EP 4 708 248 A1**

(12) **EUROPEAN PATENT APPLICATION**
published in accordance with Art. 153(4) EPC

(43) Date of publication:
**11.03.2026 Bulletin 2026/11**

(21) Application number: **24815331.4**

(22) Date of filing: **22.05.2024**

(51) International Patent Classification (IPC):
**G08G 1/16** (2006.01)     **B60W 50/00** (2006.01)

(52) Cooperative Patent Classification (CPC):
**B60W 50/00; G08G 1/16**

(86) International application number:
**PCT/JP2024/018853**

(87) International publication number:
**WO 2024/247847 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023 JP 2023090136**

(71) Applicant: **Inter-University Research Institute
Corporation
Research Organization of Information and
Systems
Tachikawa-shi,
Tokyo 190-0014 (JP)**

(72) Inventors:
• **HAYDON, James
Chiyoda-ku
Tokyo 101-8430 (JP)**

• **HASUO, Ichiro
Chiyoda-ku
Tokyo 101-8430 (JP)**
• **BONDU, Martin
Chiyoda-ku
Tokyo 101-8430 (JP)**
• **EBERHART, Clovis
Chiyoda-ku
Tokyo 101-8430 (JP)**
• **DUBUT, Jeremy
Chiyoda-ku
Tokyo 101-8430 (JP)**

(74) Representative: **Richardt Patentanwälte PartG
mbB
Wilhelmstraße 7
65185 Wiesbaden (DE)**

(54) **SAFETY RULE GENERATION DEVICE, MOVING BODY, AUTONOMOUS DRIVING SYSTEM,
SAFETY RULE GENERATION METHOD, AND PROGRAM**

(57)     A safety rule generation device includes: a control flow input unit configured to receive input of a plurality of control flows indicating state transitions of a plurality of moving bodies, respectively, the moving bodies operating in a predetermined scenario; a control flow integration unit configured to generate an integrated control flow in which the plurality of control flows are integrated based on transition conditions assigned to the control flows; a constraint assignment unit configured to assign logical expression constraints that guarantee safety to respective states included in the integrated control flow; and a safety rule generation unit configured to generate a safety rule based on the logical expression constraints.

FIG.1

**Description**

TECHNICAL FIELD

The present invention relates to a safety rule generation device, a moving body, an autonomous driving system, a safety rule generation method, and a program.

BACKGROUND ART

There is a technology for formulating safety rules for autonomous driving. The safety rule formulation technology is a technology for formulating safety rules that can be mathematically proved safe. For example, NPL 1 discloses a mathematical model referred to as a Responsibility-Sensitive Safety (RSS) theory. For example, NPL 2 discloses Goal-Aware RSS (GA-RSS), which extends the responsibility-sensitive safety theory and guarantees the achievement of a predetermined goal.

CITATION LIST

NON-PATENT LITERATURE

NPL 1: Shai Shalev-Shwartz, Shaked Shammah, and Amnon Shashua, "On a formal model of safe and scalable self-driving cars," CoRR, abs/1708.06374, 2017.
NPL 2: I. Hasuo, C. Eberhart, J. Haydon, J. Dubut, R. Bohrer, T. Kobayashi, S. Pruekprasert, X. Zhang, E. A. Pallas, A. Yamada, K. Suenaga, F. Ishikawa, K. Kamijo, Y. Shinya, and T. Suetomi, "Goal-aware RSS for complicated scenarios via program logic," IEEE Transactions on Intelligent Vehicles, 2023, CoRR abs/2207.02387.

SUMMARY OF THE INVENTION

TECHNICAL PROBLEM

However, according to the related art, it has been difficult to formulate a safety rule that can cope with a complicated scenario. For example, according to the related art, it is manually done to divide a complicated scenario into simple sub-scenarios and assign a safety rule to each sub-scenario. A complicated scenario in which a plurality of vehicles interact includes enormous conditional branches, and it is not realistic to manually formulate a safety rule that covers all conditions.
In view of the above technical problems, it is an object of the present invention to formulate a safety rule that can cope with a complicated scenario, with ease.

SOLUTION TO THE PROBLEM

In order to solve the above problems, a safety rule generation device according to one embodiment of the present invention includes: a control flow input unit configured to receive input of a plurality of control flows indicating state transitions of a plurality of moving bodies, respectively, the moving bodies operating in a predetermined scenario; a control flow integration unit configured to generate an integrated control flow in which the plurality of control flows are integrated based on transition conditions assigned to the control flows; a constraint assignment unit configured to assign logical expression constraints that guarantee safety to respective states included in the integrated control flow; and a safety rule generation unit configured to generate a safety rule based on the logical expression constraints.

ADVANTAGEOUS EFFECTS OF THE INVENTION

According to one embodiment of the present invention, a safety rule that can cope with a complicated scenario can be formulated with ease.

BRIEF DESCRIPTION OF THE DRAWINGS

[FIG. 1] FIG. 1 is a diagram showing an example of a junction scenario.
[FIG. 2] FIG. 2 is a diagram showing an example of a control flow graph.
[FIG. 3] FIG. 3 is a diagram showing an example of a hybrid control flow graph.
[FIG. 4] FIG. 4 is a diagram showing an example of a hybrid control flow graph.
[FIG. 5] FIG. 5 is a block diagram showing an example of an overall configuration of an autonomous driving system.
[FIG. 6] FIG. 6 is a block diagram showing an example of a hardware configuration of an autonomous driving system.
[FIG. 7] FIG. 7 is a block diagram showing an example of a functional configuration of an autonomous driving system.
[FIG. 8] FIG. 8 is a flowchart showing an example of an autonomous driving method.
[FIG. 9] FIG. 9 is a diagram showing an example of an experimental result.

DETAILED DESCRIPTION OF THE INVENTION

Embodiments of the present invention will be described below with reference to the accompanying drawings. In the present specification and the drawings, components having substantially the same functional configuration are denoted by the same reference numerals and redundant descriptions thereof are omitted.

[Embodiment]

An embodiment of the present invention is an autonomous driving system for safely moving a moving body capable of autonomous driving. In the autonomous driving system according to the present embodiment, a safety rule generation device generates a safety rule capable of coping with a complicated scenario in which a plurality of vehicles interact, and a moving body autonomously executes a driving operation according to the safety rule.

Examples of the moving body according to the present embodiment include an autonomous driving vehicle, a fixed-route bus having a fixed traveling route, an unmanned aerial vehicle, such as a drone and the like, a carrier robot used at a manufacturing site, a logistics site, and the like, and an autonomous driving robot, such as a household chore robot used at a home, an office, and the like. Hereinafter, in the present embodiment, an autonomous driving system for safely moving an autonomous driving vehicle will be described as an example.

<Autonomous Driving Safety Rule>

A safety guarantee of autonomous driving is an important issue both industrially and socially. In recent years, "formulation of logical safety rules" has received particular attention. The objective of "formulation of logical safety rules" is to formulate safety rules that guarantee "safety as long as the safety rules are obeyed (and that, what is more, can be proved safe mathematically and logically)" for various driving scenarios.

Logical safety rules are important in the following points. First, they are useful for improving the safety of autonomous driving vehicles. Second, they make it possible to explain the safety of autonomous driving vehicles to society in an easy-to-understand manner. Third, by sectioning the ranges of responsibilities, it is possible to reduce the risk of manufacturers incurring unexpected or excessive manufacturer liability, and to promote the development of autonomous driving as an industry.

As a conventional autonomous driving safety rule formulation technology, there is the responsibility-sensitive safety (RSS) theory disclosed in NPL 1. RSS is widely recognized as an autonomous driving safety rule. For example, RSS is used in many academic studies, and reflection of RSS to international standards is being considered.

RSS is constructed with the following logical structure. That is, it is such logic as "As long as a precondition is satisfied, execution of a control strategy (proper response) can result in satisfying a safety condition". A control strategy is a measure for controlling an autonomous driving vehicle. An example of a control strategy is a driving operation, such as turning the steering wheel, applying the brake, accelerating the vehicle by stepping on the accelerator, and the like.

The conventional RSS disclosed in NPL 1 cannot cope with complicated scenarios. For example, the conventional RSS can only cope with simple scenarios, such as an autonomous driving vehicle avoiding a collision with another vehicle traveling in the same lane, and the like. That is, the conventional RSS guarantees only the safety condition "collision avoidance". Hereinafter, the conventional RSS is referred to as "Collision Avoiding RSS (CA-RSS)".

NPL 2 proposes a goal-aware RSS (GA-RSS) that extends the collision avoiding RSS and guarantees the achievement of a predetermined goal. The goal-aware RSS is constructed with the following logical structure. That is, it is logic like "As long as a precondition is satisfied, execution of a control strategy can result in the achievement of a predetermined postcondition with simultaneous satisfaction of a safety condition".

According to the goal-aware RSS, for example, safe achievement of a goal, such as "repeating changing lanes while avoiding collision, and stopping at a specific position on the shoulder" and the like, can be guaranteed. Therefore, the goal-aware RSS can formulate safety rules that can cope with complicated scenarios.

The goal-aware RSS formulates safety-guaranteed safety rules by the following procedure: first, generating scenarios corresponding to the movements of a subject vehicle and surrounding other vehicles; next, setting a safety rule for each generated scenario; then, logically proving the safety of each safety rule that is set.

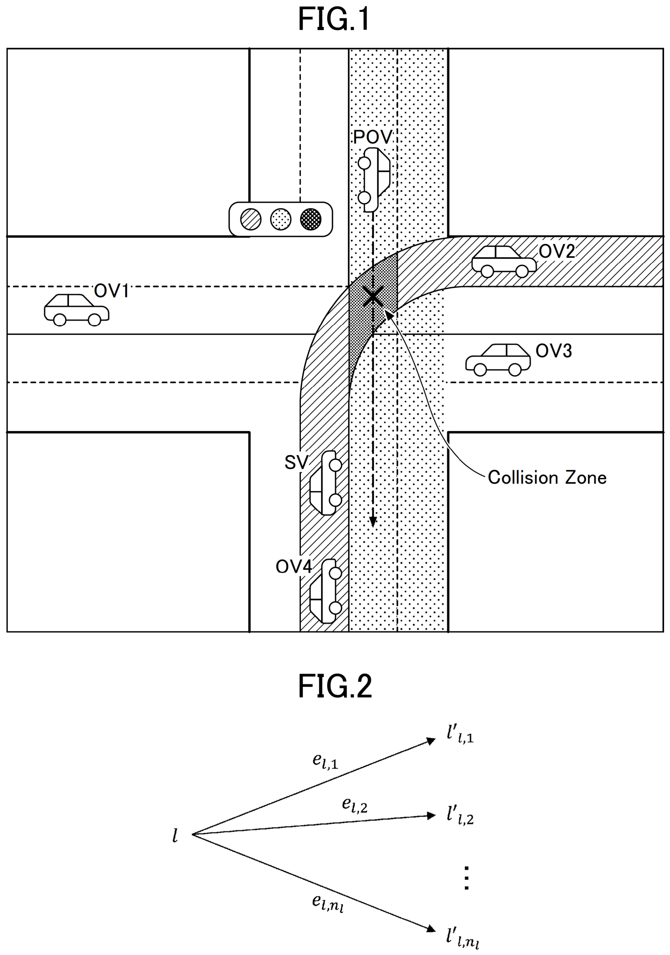

For example, consider a scenario in which the subject vehicle turns right at a junction. Hereinafter, this scenario is referred to as a "junction scenario". FIG. 1 is a diagram for explaining an example of the junction scenario.

As shown in FIG. 1, the junction scenario is a scenario in which the subject vehicle (SV) turns right at a junction. FIG. 1 shows a principal other vehicle (POV) approaching in the oncoming lane. The subject vehicle SV must turn right at the junction while avoiding collision with the oncoming vehicle POV.

In the junction scenario, first, a scenario is generated by combining a movement of the oncoming vehicle POV and a movement of the subject vehicle SV. Here, the following case branching needs to be considered. The first is whether the oncoming vehicle POV would pass the junction before the subject vehicle SV or after the subject vehicle SV. The second is when applying the brake to stop, whether the subject vehicle SV or the oncoming vehicle POV would stop before a potential collision zone (CZ) in the junction, within the potential collision zone, or after passing the potential collision zone.

In the goal-aware RSS, after a scenario as described above is generated, it is required to exhaustively find possible branch cases, and to set a safety rule for each. Therefore, the goal-aware RSS has a problem that it is not realistic to formulate a safety rule manually for a complicated scenario in which the number of case branches is enormous.

The present embodiment aims for formulating a safety rule that can cope with a complicated scenario in which the number of case branches is enormous with ease. In one aspect, according to the present embodiment, it is possible to efficiently develop an autonomous driving vehicle that can cope with various scenarios including complicated scenarios.

<Hybrid Control Flow Graph (hCFG)>

In the present embodiment, in order to formulate a safety rule that can cope with a complicated scenario in which a plurality of vehicles interact, the movement of each vehicle is modeled by a hybrid control flow graph (hCFG). The hCFG is a control flow graph (CFG) extended with flow dynamics. The CFG is a graphical representation of all possible paths taken when a program is executed.

FIG. 2 is a diagram showing an example of a control flow graph. As shown in FIG. 2, a CFG includes a plurality of locations $l$, $l'_{l,1}$, $\cdots$, and $l'_{l,nl}$, and the location $l$ and the respective locations $l'_{l,1}$, $\cdots$, and $l'_{l,nl}$ are connected by directed edges $e_{l,1}$, $\cdots$, and $e_{l,nl}$. Here, the location $l$ represents a base location. A directed edge $e_{l,i}$ (where $i=1$, $\cdots$, and $n_l$) means jumping from the location $l$ to another location $l_{l,i}$.

In hCFG, a guard $A_{l,i}=\text{Guard}(e_{l,i})$ is assigned to each directed edge $e_{l,i}$. A guard $A$ is a mechanism synonymous with a conditional expression or a conditional branch in a programming language. A guard $A$ is an expression that must be evaluated as being true in order to continue processing at a branch. When the guard $A$ is evaluated as being false, processing proceeds to another branch that is evaluated as being true.

A guard $A$ means that if no guard $A_{l,i}$ is satisfied at the location $l$, processing stops at the location $l$, and when at least any guard $A_{l,i}$ is satisfied, processing jumps from the location $l$ to the i-th location $l_{l,i}$.

hCFG is defined by an equation (1).

$$G = (L, \Sigma, E, V, Flow, Guard, Assign, l_{Init}, Final)$$

$$(1)$$

L represents a finite set of locations. $\Sigma$ represents a finite set of event names. $E \subseteq L \times \Sigma \times L$ is a finite set of directed edges representing discrete jumps. V represents a finite set of real-value variables. Flow represents a function that associates an Ordinary Differential Equation (ODE) system, x=f, with each location $l \in L$. Guard represents a function that associates each directed edge $e \in E$ with a guard $A$. Assign represents a function that associates a command in the form x:=f with each directed edge $e \in E$ and a label Init indicating initialization. $l_{Init} \in L$ represents the initial location. $Final \in L$ represents a set of final locations.

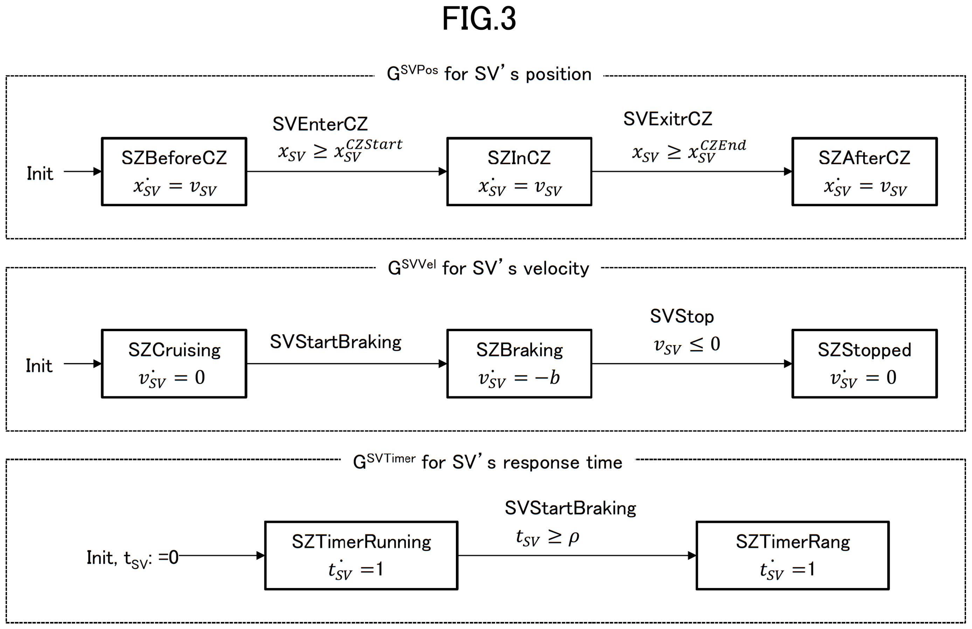

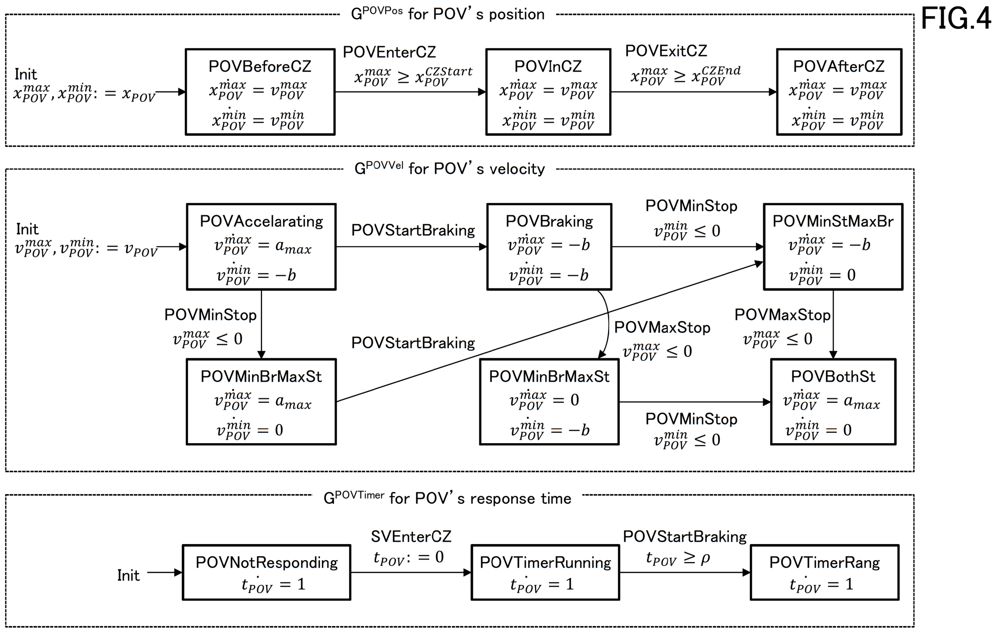

FIGS. 3 and 4 are diagrams showing examples of hybrid control flow graphs. Of these, FIG. 3 is a hybrid control flow graph showing a state transition of the subject vehicle SV in a junction scenario. FIG. 4 is a hybrid control flow graph showing a state transition of the oncoming vehicle POV in a junction scenario.

In FIGS. 3 and 4, it is assumed that the subject vehicle SV is an autonomous driving vehicle. Therefore, for example, the subject vehicle SV can acquire data, such as the velocity, the position, and the like of the oncoming vehicle POV when turning right at a junction. That is, the subject vehicle SV is configured to be able to recognize the state, the movement, and the like of the vehicles existing around the subject vehicle SV. For prediction of the control strategy of the oncoming vehicle POV, a method that limits the options of the movements of the oncoming vehicle POV is employed, on the premise that the oncoming vehicle POV is driving in accordance with physical laws, traffic rules, or driving customs, as when a human drives a vehicle.

As shown in FIGS. 3 and 4, in the present embodiment, the state transition of each vehicle is modeled for each type of state. The types of states are, for example, a vehicle position, a vehicle velocity, and a vehicle response time. For example, $G^{SVPos}$ shown in FIG. 3 is an hCFG indicating the state transition of the position of the subject vehicle SV. $G^{POVVel}$ shown in FIG. 4 is an hCFG indicating the state transition of the velocity of the oncoming vehicle POV.

In FIGS. 3 and 4, rectangular boxes represent locations I, and arrows connecting the locations I represent directed edges e. The label and logical expression shown near a directed edge e represent a guard A. The label shown at the guard A is an event name. The event name is shared among respective hCFGs, and locations I, at which the guards A have the same event name, mean that the vehicles interact.

When a movement of an autonomous driving vehicle is modeled by hCFG, the location I corresponds to the state of the autonomous driving vehicle. The directed edge e corresponds to the state transition of the autonomous driving vehicle. Furthermore, the guard A corresponds to the transition condition for the state transition to occur.

<Synchronized Product of hCFG>

When there are multiple hCFGs, they can be integrated into an hCFG network. Hereinafter, an operation for integration into an hCFG network is referred to as a "synchronized product".

An hCFG network is defined by Equation (2).

$$N = \left( G^{(1)}, \cdots, G^{(k)} \right)$$

$$(2)$$

$G^{(1)}, \cdots,$ and $G^{(k)}$ are open hCFGs, respectively. An open hCFG is defined in the same way as an hCFG except that Flow(I) does not cover all real-value variables, and that the final location is indefinite.

$G^{(1)}, \cdots,$ and $G^{(k)}$ included in the hCFG network have the following characteristics.

- Their locations $L^{(1)}, \cdots,$ and $L^{(k)}$ are separated.
- They share the same variable set V.
- They satisfy predetermined compatibility conditions. The predetermined compatibility conditions include the following two compatibility conditions.

    --The first compatibility condition is that the flow dynamics of their locations $L^{(1)}, \cdots,$ and $L^{(k)}$ do not conflict and are perfect.
    --The second compatibility condition is that the commands assigned to their edges $e^{(1)}, \cdots,$ and $e^{(k)}$ do not conflict.

The synchronized product $G_{N,Final}$ of the hCFG network N is an hCFG defined below.

-The synchronized product $G_{N,Final}$ includes locations $I^{(1)}, \cdots,$ and $I^{(k)}$, where $I^{(i)} \in L^{(i)}$.
-The set $E_{N, Final}$ of directed edges of the synchronized product $G_{N, Final}$ is a union $E^{(1)} \cup \cdots \cup E^{(k)}$ of directed edges having event names of $G^{(1)}, \cdots,$ and $G^{(k)}$.
-The variable set V of the synchronized product $G_{N, Final}$ is any of the variable sets of $G^{(1)}, \cdots,$ and $G^{(k)}$.
-The synchronized product $G_{N,Final}$ includes a directed edge $(I^{(1)}, \cdots, I^{(k)}) \rightarrow^a (I'^{(1)} \cdots, I'^{(k)})$ that indicates transition from the location $I^{(i)}$ to the location $I'^{(i)}$ when an event $a \in E^{(i)}$ occurs, and that indicates staying at the location $I^{(i)}$ otherwise. That is, all hCFGs sharing the event "a" synchronize on the event "a".
-The flow dynamics of the synchronized product $G_{N,FInal}$ is a union of the flow dynamics of the respective locations $I^{(1)}, \cdots,$ and $I^{(k)}$. Under the above compatibility condition, this union is defined clearly and covers all the variables of the variable set V.
-The guard of a directed edge $(I^{(1)}, \cdots, I^{(k)}) \rightarrow^a (I'^{(1)}, \cdots, I'^{(k)})$ is an association of guards $A^{(i)}$ associated with the respective directed edges $I^{(i)} \rightarrow^a I'^{(i)}$.
-A command assigned to a directed edge of the synchronized product $G_{N, Final}$ is an association of the directed edges of the respective hCFGs. Under the above compatibility condition, the assigned command is not overwritten. The initial assigned command is defined in the same way.
-The initial location $I_{init}$ of the synchronized product $G_{N,Final}$ is a tuple composed of locations $I^{(1)}_{Init}, \cdots,$ and $I^{(k)}_{Init}$.
-The final location set "Final" of the synchronized product $G_{N,Final}$ is identified for each individual case. "Final" is a set of locations defined by $Final \subseteq L^{(1)} \times \cdots \times L^{(k)}$.

<Hoare Annotation>

In the present embodiment, in order to guarantee the safety of the safety rule, a Hoare Annotation $\gamma$ is assigned to each location included in the synchronized product of the hCFGs modeling the scenarios. The Hoare Annotation $\gamma$ is an example of a logical expression constraint.

The Hoare Annotation $\gamma$ is derived from Hoare Quadruples used for the safety verification in the goal-aware RSS (see NPL 2). The Hoare Annotation $\gamma$ includes a precondition, a control strategy, and a postcondition constituting the Hoare Quadruples.

The precondition, the control strategy, and the postcondition included in the Hoare annotation $\gamma$ are defined so as to satisfy a predetermined safety condition. Specifically, the Hoare annotation $\gamma$ is defined such that the precondition being true guarantees that the postcondition is true during the execution of the control strategy, and that the predetermined safety condition is true during the execution of the control strategy.

With the synchronized product of the hCFGs being tracked back from the final location "Final" to the initial location $I_{Init}$, a Hoare annotation $\gamma$ is assigned to each location. A Hoare annotation $\gamma$ assignable to the final location "Final" is searched for, and if an assignable Hoare annotation $\gamma$ exists, a Hoare annotation $\gamma$ assignable to the immediately preceding location is searched for. If a Hoare annotation $\gamma$ is successfully assigned to the initial location $I_{Init}$ through repetition of this process, a safety rule that fulfills the scenario while satisfying the predetermined safety condition can be formulated.

<Overall Configuration of Autonomous Driving System>

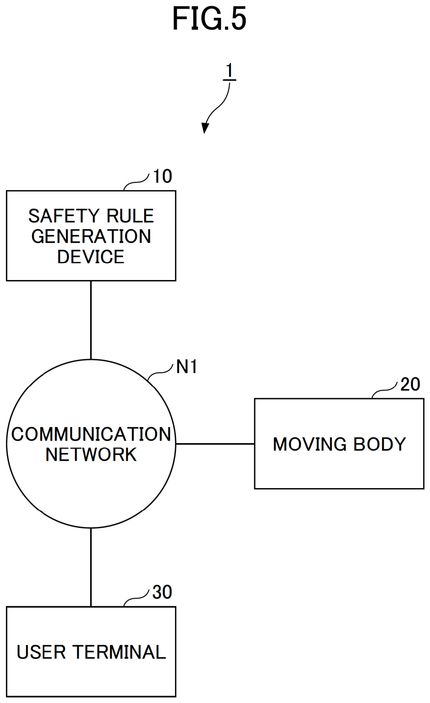

The overall configuration of the autonomous driving system according to the present embodiment will be described with reference to FIG. 5. FIG. 5 is a block diagram showing an example of the overall configuration of the autonomous driving system according to the present embodiment.

As shown in FIG. 5, the autonomous driving system 1 according to the present embodiment includes a safety rule generation device 10, a moving body 20, and a user terminal 30. The safety rule generation device 10, the moving body 20, and the user terminal 30 are data-communicably connected to each other via a communication network N1, such as a Local Area Network (LAN), the Internet, and the like.

The safety rule generation device 10 is an information processing device, such as a personal computer, a workstation, a server, and the like, that generates safety rules in response to a request from the user terminal 30. The safety rule generation device 10 receives control flow information from the user terminal 30. The control flow information is information that describes state transitions of a plurality of vehicles operating in a scenario for which a safety rule is to be generated. In the present embodiment, the control flow information is described by hCFG. The safety rule generation device 10 generates a safety rule based on the control flow information and outputs safety rule information. The safety rule information is information indicating the safety rule for the scenario.

The moving body 20 is a moving body having an autonomous driving function. Safety rule information outputted by the safety rule generation device 10 is previously stored in the moving body 20. The moving body 20 autonomously executes a driving operation in accordance with the safety rule indicated by the safety rule information. In the present embodiment, an example of the moving body 20 is an autonomous driving vehicle.

The user terminal 30 is an information processing terminal, such as a personal computer, a tablet terminal, a smartphone, and the like, that is operated by a user of the autonomous driving system 1. The user terminal 30 receives an input of a scenario for which a safety rule is to be generated in response to an operation of the user, and transmits control flow information generated based on the scenario to the safety rule generation device 10. The user terminal 30 may be incorporated in a vehicle-mountable device mounted on the moving body 20. An example of the vehicle-mountable device is a car navigation system and the like.

The overall configuration of the autonomous driving system 1 shown in FIG. 5 is only an example, and there may be various system configuration examples according to applications and purposes. For example, the safety rule generation device 10 may be realized by a plurality of computers or may be realized as a cloud computing service. Further, for example, the autonomous driving system 1 may be realized by mounting the moving body 20 with a vehicle-mountable device having the functions that the moving body 20 and the user terminal 30 should have, respectively.

<Hardware Configuration of Autonomous Driving System>

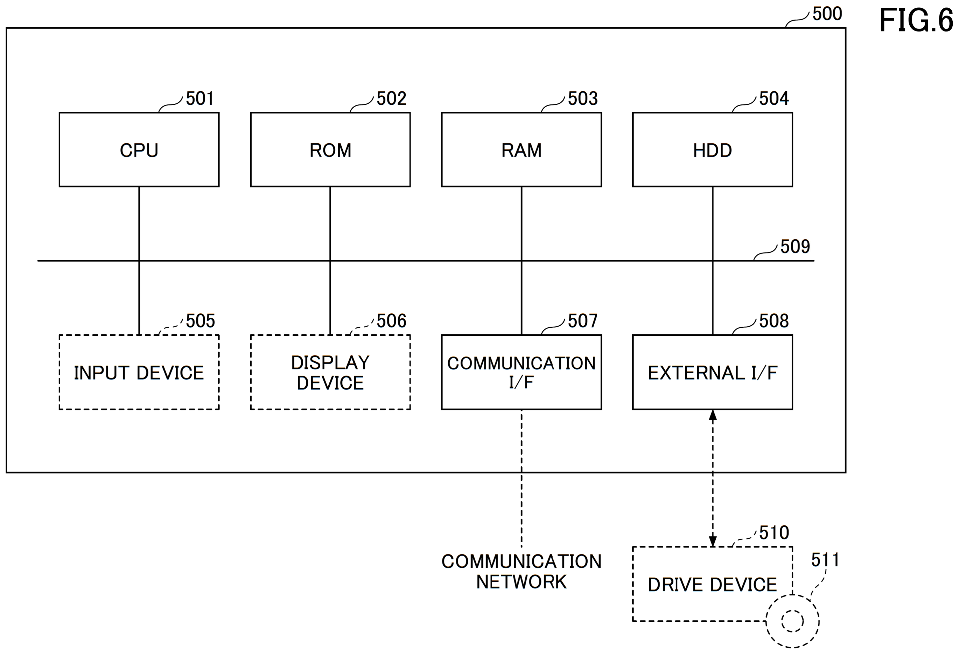

The hardware configuration of each device included in the autonomous driving system 1 according to the present embodiment will be described with reference to FIG. 6.

<<Hardware Configuration of Computer>>

The safety rule generation device 10, the vehicle-mountable device mounted on the moving body 20, and the user terminal 30 according to the present embodiment are realized by, for example, a computer. FIG. 6 is a block diagram showing an example of the hardware configuration of the computer according to the present embodiment.

As shown in FIG. 6, a computer 500 according to the present embodiment includes a Central Processing Unit (CPU) 501, a Read Only Memory (ROM) 502, a Random Access Memory (RAM) 503, a Hard Disk Drive (HDD) 504, an input device 505, a display device 506, a communication interface (I/F) 507, and an external I/F 508. The CPU 501, the ROM 502, and the RAM 503 form what is generally referred to as a computer. The hardware components of the computer 500 are connected to each other via a bus line 509. The input device 505 and the display device 506 may be types used by being connected to the external I/F 508.

The CPU 501 is an arithmetic unit that reads out programs and data from a storage device, such as the ROM 502, the HDD 504, and the like, into the RAM 503 and executes processing, thereby realizing control and functions of the entire computer 500.

The ROM 502 is an example of a nonvolatile semiconductor memory (storage device) that can retain programs and data even when the power is turned off. The ROM 502 functions as a main storage device for storing various programs, data, and the like necessary for the CPU 501 to execute various programs installed in the HDD 504. Specifically, the ROM 502 stores a boot program, such as a Basic Input/Output System (BIOS), an Extensible Firmware Interface (EFI), or the like, that is executed when the computer 500 is started, and data, such as Operating System (OS) settings, network settings, and the like.

The RAM 503 is an example of a volatile semiconductor memory (storage device) from which programs and data are erased when the power is turned off. The RAM 503 is, for example, a Dynamic Random Access Memory (DRAM), a Static Random Access Memory (SRAM), and the like. The RAM 503 provides a work area that is developed when various programs installed in the HDD 504 are executed by the CPU 501.

The HDD 504 is an example of a nonvolatile storage device that stores programs and data. Programs and data stored in the HDD 504 include an OS, which is basic software that controls the entire computer 500, and applications that provide various functions on the OS. Instead of the HDD 504, the computer 500 may use a storage device (for example, a Solid State Drive (SSD) and the like) that uses a flash memory as a storage medium.

The input device 505 includes a touch panel, operation keys and buttons, and a keyboard and a mouse that are used by a user to input various signals, a microphone for inputting voice and other sound data, and the like.

The display device 506 is composed of a liquid crystal, organic Electro-Luminescence (EL), or any other display for displaying a screen, a loudspeaker for outputting voice and other sound data, and the like.

The communication I/F 507 is an interface for connecting to a communication network and allowing the computer 500 to perform data communication.

The external I/F 508 is an interface with an external device. Examples of the external device include a drive device 510 and the like.

The drive device 510 is a device in which a recording medium 511 is set. Here, examples of the recording medium 511 include a medium for optically, electrically or magnetically recording information, such as a CD-ROM, a flexible disk, a magneto-optical disk, and the like. Further, examples of the recording medium 511 may include a semiconductor memory for electrically recording information, such as a ROM, a flash memory, and the like. Thus, the computer 500 can read data from, and/or write data into the recording medium 511 via the external I/F 508.

Various programs installed in the HDD 504 are installed by, for example, a distributed recording medium 511 being set in the drive device 510 connected to the external I/F 508 and the various programs recorded in the recording medium 511 being read out by the drive device 510. Alternatively, the various programs installed in the HDD 504 may be installed by being downloaded from another network different from the communication network via the communication I/F 507.

<Functional Configuration of Autonomous Driving System>

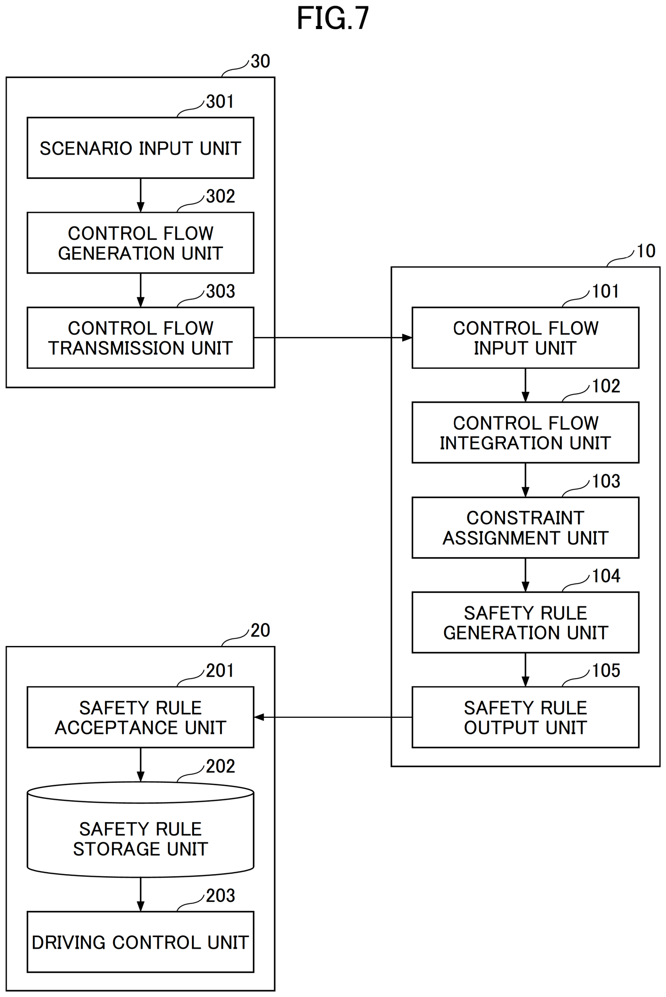

The functional configuration of the autonomous driving system according to the present embodiment will be described with reference to FIG. 7. FIG. 7 is a block diagram showing an example of the functional configuration of the autonomous driving system 1 according to the present embodiment.

<<User Terminal>>

As shown in FIG. 7, the user terminal 30 according to the present embodiment includes a scenario input unit 301, a control flow generation unit 302, and a control flow transmission unit 303.

The scenario input unit 301, the control flow generation unit 302, and the control flow transmission unit 303 are realized by, for example, a process that a program developed onto the RAM 503 from the HDD 504 shown in FIG. 6 causes the CPU 501 to execute.

The scenario input unit 301 receives an input of a scenario for which a safety rule is to be generated in response to a user operation. In the present embodiment, a scenario in which a plurality of vehicles including the moving body 20 operate is the safety rule generation target.

The control flow generation unit 302 generates a control flow based on the scenario input into the scenario input unit 301 in response to the user operation. The control flow generation unit 302 models the movement of each vehicle operating in the scenario by hCFG. Therefore, the state transition of each vehicle operating in the scenario is indicated in the control flow generated by the control flow generation unit 302.

The control flow generation unit 302 generates a control flow for each type of the state of each vehicle. In a case of a scenario of an autonomous driving vehicle, the type of the state is, for example, the position of the vehicle, the velocity of the vehicle, the reaction speed, and the like. The type of the state is not limited to these, and may include any state as long as it relates to the safety of the moving body 20.

The control flow transmission unit 303 transmits control flow information indicating the control flows generated by the control flow generation unit 302 to the safety rule generation device 10. The control flow information includes a plurality of control flows corresponding to the respective states of each vehicle operating in the scenario.

<<Safety Rule Generation Device>>

As shown in FIG. 7, the safety rule generation device 10 according to the present embodiment includes a control flow input unit 101, a control flow integration unit 102, a constraint assignment unit 103, a safety rule generation unit 104, and a safety rule output unit 105.

The control flow input unit 101, the control flow integration unit 102, the constraint assignment unit 103, the safety rule generation unit 104, and the safety rule output unit 105 are realized by a process that a program developed on the RAM 503 from the HDD 504 shown in FIG. 6 causes the CPU 501 to execute.

The control flow input unit 101 receives input of control flow information received from the user terminal 30.

The control flow integration unit 102 integrates a plurality of control flows included in the control flow information received by the control flow input unit 101. Specifically, the control flow integration unit 102 calculates a synchronized product of the plurality of control flows included in the control flow information. Thus, the control flow integration unit 102 obtains an integrated control flow in which the plurality of control flows are integrated.

In other words, the control flow integration unit 102 integrates the plurality of control flows based on transition conditions under which state transitions occur in the respective control flows. Specifically, the control flow integration unit 102 integrates the plurality of control flows by assigning transition conditions such that the vehicles will have interaction synchronously. The interaction may include causal interaction or temporal interaction.

The control flow integration unit 102 makes the vehicles interact synchronously based on the event name described in the control flows. That is, if there are directed edges including the same event name, the control flow integration unit 102 assigns a guard to each directed edge such that the events occur at the same timing.

The constraint assignment unit 103 assigns a logical expression constraint to each state included in the integrated control flow generated by the control flow integration unit 102. The constraint assignment unit 103 calculates the logical expression constraint so as to satisfy a predetermined safety condition in each state. The constraint assignment unit 103 assigns a logical expression constraint to each state retroactively from the final state to the initial state of the integrated control flow. In the present embodiment, the logical expression constraint is a Hoare annotation $\gamma$.

The safety rule generation unit 104 generates a safety rule based on the logical expression constraints that are assigned to the integrated control flow when the constraint assignment unit 103 has assigned the logical expression constraints to all states of the integrated control flow. The safety rule generation unit 104 combines the preconditions and the control strategies included in the logical expression constraints assigned to the respective states in accordance with the order indicated in the integrated control flow. Thus, a safety rule combining the preconditions and the control strategies is generated.

The safety rule output unit 105 generates safety rule information indicating the safety rule generated by the safety rule generation unit 104. The safety rule output unit 105 transmits the generated safety rule information to the moving body 20.

<<Moving Body>>

As shown in FIG. 7, the moving body 20 according to the present embodiment includes a safety rule acceptance unit 201, a safety rule storage unit 202, and a driving control unit 203.

The safety rule acceptance unit 201 and the driving control unit 203 are realized by, for example, a process that a program developed onto the RAM 503 from the HDD 504 shown in FIG. 6 causes the CPU 501 to execute. The safety rule storage unit 202 is realized by, for example, using the HDD 504 shown in FIG. 6.

The safety rule acceptance unit 201 accepts an input of safety rule information. The safety rule acceptance unit 201 stores the accepted safety rule information in the safety rule storage unit 202. The safety rule acceptance unit 201 may accept the safety rule information by receiving the safety rule information from the safety rule generation device 10. The safety rule acceptance unit 201 may accept the safety rule information via the input device 505 or the like in response to a user operation.

The safety rule storage unit 202 stores the safety rule information. The safety rule information includes the safety rule generated by the safety rule generation device 10.

The driving control unit 203 executes a driving operation for fulfilling a predetermined scenario based on the safety rule information read out from the safety rule storage unit 202. Thus, autonomous driving, in which the moving body 20 fulfills a predetermined scenario while satisfying a predetermined safety condition, is realized.

<Processing Procedure of Autonomous Driving System>

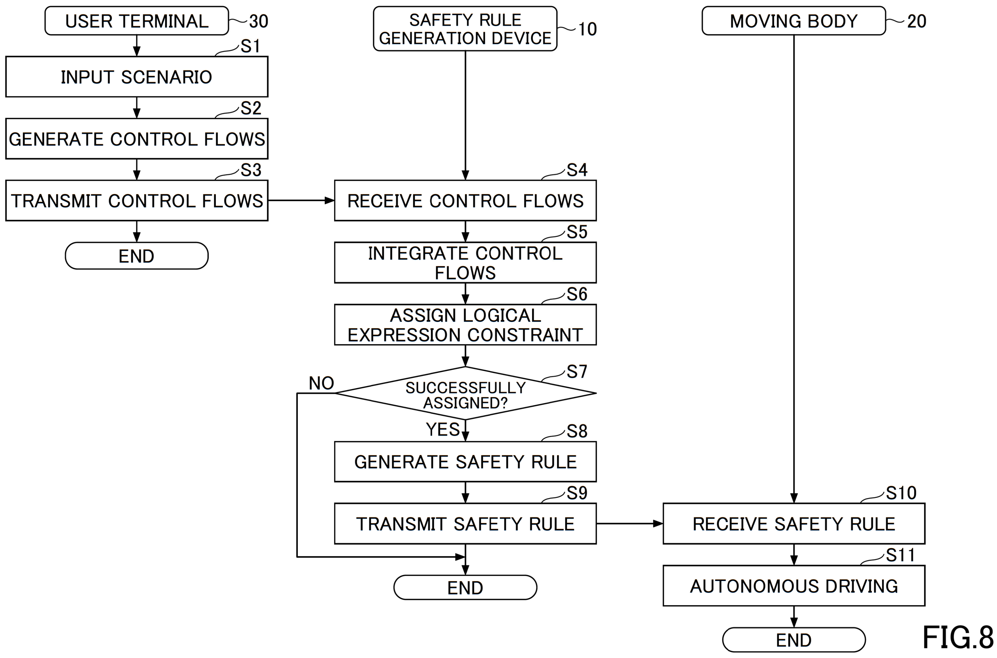

The processing procedure of the autonomous driving method executed by the autonomous driving system 1 according to the present embodiment will be described with reference to FIG. 8. FIG. 8 is a flowchart showing an example of the processing procedure of the autonomous driving method according to the present embodiment.

In step S1, the scenario input unit 301 of the user terminal 30 receives an input of a scenario, for which a safety rule is to be generated, in response to a user operation. The scenario input unit 301 sends scenario information indicating the input scenario to the control flow generation unit 302.

In step S2, the control flow generation unit 302 of the user terminal 30 receives the scenario information from the scenario input unit 301. Next, the control flow generation unit 302 generates a control flow indicating a state transition of a vehicle for each vehicle operating in the scenario indicated by the scenario information, in accordance with a user operation. The control flow generation unit 302 generates a control flow for each type of the state for each vehicle. Then, the control flow generation unit 302 sends the plurality of generated control flows to the control flow transmission unit 303.

Specifically, the control flow generation unit 302 models the state transition of each vehicle by hCFG. First, for each vehicle, the control flow generation unit 302 generates locations indicating the states of the vehicle, and connects the locations by a directed edge indicating a state transition. Next, the control flow generation unit 302 assigns a guard indicating a transition condition to the directed edge. Thus, a control flow modeled by hCFG is generated.

In step S3, the control flow transmission unit 303 of the user terminal 30 receives the plurality of control flows from the control flow generation unit 302. Next, the control flow transmission unit 303 generates control flow information including the plurality of control flows. Then, the control flow transmission unit 303 transmits the control flow information to the safety rule generation device 10.

In step S4, the control flow input unit 101 of the safety rule generation device 10 receives the control flow information from the user terminal 30. Next, the control flow input unit 101 accepts an input of the received control flow information. Subsequently, the control flow input unit 101 transmits the input control flow information to the control flow integration unit 102.

In step S5, the control flow integration unit 102 of the safety rule generation device 10 receives the control flow information from the control flow input unit 101. Next, the control flow integration unit 102 integrates the plurality of control flows included in the control flow information. Subsequently, the control flow integration unit 102 transmits the integrated control flow, in which the plurality of control flows are integrated, to the constraint assignment unit 103.

Specifically, the control flow integration unit 102 integrates the plurality of control flows by assigning transition conditions such that vehicles have a synchronous causal or temporal interaction. The control flow integration unit 102 refers to the event names of the guards assigned to the directed edges of the respective control flows (hCFG), and when there are directed edges having the same event name, assigns a guard to the directed edges such that these events occur at the same timing.

In step S6, the constraint assignment unit 103 of the safety rule generation device 10 receives the integrated control flow from the control flow integration unit 102. Next, the constraint assignment unit 103 assigns a logical expression constraint to each state included in the integrated control flow. Specifically, the constraint assignment unit 103 assigns a Hoare annotation $\gamma$ to each location l while tracking back the directed edges e from the final location "Final" to the initial location $l_{Init}$ of the integrated control flow (hCFG).

More specifically, the constraint assignment unit 103 calculates a precondition satisfying a predetermined safety condition by regarding the location to which the constraint is to be assigned (referred to as a "target location") as a postcondition and the directed edge connected to the target location as a control strategy. Next, the constraint assignment unit 103 determines whether or not the immediately preceding location connected to the directed edge satisfies the precondition.

When the immediately preceding location satisfies the precondition, the constraint assignment unit 103 assigns the Hoare annotation $\gamma$ including the precondition, the control strategy, and the postcondition to the target location. When the immediately preceding location does not satisfy the precondition, the constraint assignment unit 103 determines that it is impossible to assign a Hoare annotation $\gamma$ to the target location. Thereafter, the constraint assignment unit 103 repeats assigning a Hoare annotation $\gamma$ in the same manner, by regarding an immediately preceding location as the target location.

In step S7, the constraint assignment unit 103 of the safety rule generation device 10 determines whether or not the logical expression constraints have successfully been assigned to all states included in the integrated control flow in step S6. Specifically, the constraint assignment unit 103 determines whether or not a Hoare annotation $\gamma$ has been assigned to the initial location $l_{Init}$ of the integrated control flow (hCFG).

When the logical expression constraints have been successfully assigned to the integrated control flow (YES), the constraint assignment unit 103 transmits the integrated control flow to which the logical expression constraints have been assigned to the safety rule generation unit 104, to proceed to step S8. On the other hand, when the integrated control flow has failed to be assigned logical expression constraints (NO), the constraint assignment unit 103 terminates the process without generating a safety rule. When having failed to generate a safety rule, the user can reconsider the scenario and execute the process again from step S1.

A case where logical expression constraints cannot be assigned to the integrated control flow in step S7 corresponds to a case where the logical expression constraints (=Hoare annotations $\gamma$) have failed to be assigned in a manner to satisfy the safety condition in the respective states of the control flow in which the state transitions of the respective vehicles are integrated. In other words, a failure to assign the logical expression constraints to the integrated control flow means that a safe achievement of the goal cannot be proved by the control strategies indicated in the integrated control flow. In this case, it is necessary to consider other control strategies or another scenario and generate a safety rule again. Since a Hoare annotation $\gamma$ includes a precondition, a control strategy, and a postcondition, in a case of a failure to assign logical expression constraints, for example, the scenario of the Hoare annotation $\gamma$ may be reconsidered and the process may be executed again from step S1.

In step S8, the safety rule generation unit 104 of the safety rule generation device 10 receives the integrated control flow from the constraint assignment unit 103. Next, the safety rule generation unit 104 generates a safety rule based on the logical expression constraints assigned to the integrated control flow. Specifically, the safety rule generation unit 104 combines the preconditions and the control strategies of the logical expression constraints assigned to the respective states according to the order indicated in the integrated control flow. The safety rule generation unit 104 transmits the safety rule in which the preconditions and the control strategies are combined to the safety rule output unit 105.

In step S9, the safety rule output unit 105 of the safety rule generation device 10 receives the safety rule from the safety rule generation unit 104. Next, the safety rule output unit 105 generates safety rule information indicating the safety rule. Then, the safety rule output unit 105 transmits the safety rule information to the moving body 20.

In step S10, the safety rule acceptance unit 201 of the moving body 20 receives the safety rule information from the safety rule generation device 10. Next, the safety rule acceptance unit 201 accepts the input of the received safety rule information. Subsequently, the safety rule acceptance unit 201 stores the accepted safety rule information in the safety rule storage unit 202.

In step S11, the driving control unit 203 of the moving body 20 receives an operation for starting autonomous driving from the driver of the moving body 20. Next, the driving control unit 203 reads out the safety rule information stored in the safety rule storage unit 202. Subsequently, the driving control unit 203 executes a driving operation for fulfilling the predetermined scenario based on the read-out safety rule information. Thereafter, the driving control unit 203 autonomously executes the driving operation in accordance with the safety rule until the scenario is completed or the driver performs an operation to terminate the autonomous driving.

<Experimental Result>

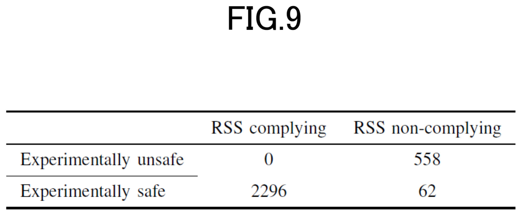

The result of verification of the safety of the safety rule according to the present embodiment will be described with reference to FIG. 9. FIG. 9 is a diagram showing an example of the experimental result.

In the experiment, simulation was performed 23,328 times using a simulator on which the junction scenario shown in FIG. 1 was implemented. Specifically, eight patterns of the initial position of the oncoming POV were prepared, and simulation was performed 2,916 times for each of them.

In FIG. 9, "RSS complying" refers to a case where the initial state of the simulation satisfies the precondition of the safety rule. "RSS non-complying" refers to a case where the initial state of the simulation does not satisfy the precondition of the safety rule.

FIG. 9 shows the result of summing up the number of times the scenario could be safely fulfilled (Experimentally safe) and the number of times the scenario could not be safely fulfilled (Experimentally unsafe) in each simulation. As shown in FIG. 9, according to "RSS-complying", the scenario was fulfilled safely in all the simulations. On the other hand, according to "RSS-non-complying", approximately 90% of the simulations failed to fulfill the scenario safely.

The following conclusions are drawn from the experimental result shown in FIG. 9. First, satisfying the precondition of the safety rule guarantees safety. Second, the safety rule is not overly defensive. If the safety rule is overly defensive, the scenario can be fulfilled safely even when the precondition of the safety rule is not satisfied. However, even if the scenario can be safely fulfilled, an appropriate driving operation may not be performed, by, for example, more time than necessary being taken. When the precondition of the safety rule is not satisfied, a lesser number of successes in safely fulfilling the scenario can be evaluated as being better.

As described above, the result of this experiment shows that use of the safety rule of the present embodiment guaranteed safety even in a complicated scenario in which a plurality of vehicles interact, such as a junction scenario.

<Effect of Embodiment>

The safety rule generation device 10 of the present embodiment integrates a plurality of control flows indicating state transitions of each of a plurality of moving bodies operating in a predetermined scenario, and generates a safety rule based on logical expression constraints assigned to respective states. The safety rule generation device 10 can automatically calculate an integrated control flow covering combinations of the respective states of the plurality of moving bodies. Therefore, according to the present embodiment, a safety rule that can cope with a complicated scenario can be formulated with ease.

The safety rule generation device 10 according to the present embodiment may integrate a plurality of control flows by assigning transition conditions such that the plurality of moving bodies have interaction synchronously. The interaction may include causal interaction or temporal interaction. Thus, according to the present embodiment, it is possible to formulate a safety rule while considering the interaction from various perspectives.

The safety rule generation device 10 according to the present embodiment may generate a safety rule when logical constraints have been assigned to all states included in an integrated control flow. A logical constraint may include a precondition, a control strategy, and a postcondition. Since a logical constraint indicates a control strategy for which safety is guaranteed in the state concerned, the moving body 20 can execute control strategies for which safety is guaranteed in all states that may occur in the scenario.

[Supplementary Note]

Each of the functions of the embodiment described above can be realized by one or a plurality of processing circuits. The term "processing circuit" as used herein includes a processor programmed to execute each function by software, such as a processor implemented by an electronic circuit, and devices designed to execute each function described above, such as an Application Specific Integrated Circuit (ASIC), a Digital Signal Processor (DSP), a Field Programmable Gate Array (FPGA), an existing circuit module, and the like.

Although the embodiments of the present invention have been described in detail, the present invention is not limited to these embodiments, and various modifications and changes are applicable within the scope of the spirit of the present invention as set forth in the claims.

The present application claims priority to Japanese Patent Application No. 2023-90136, filed with the Japan Patent Office on May 31, 2023, the content of which is hereby incorporated by reference in its entirety.

REFERENCE SIGNS LIST

1 autonomous driving system
10 safety rule generation device
20 moving body
30 user terminal
101 control flow input unit
102 control flow integration unit
103 constraint assignment unit
104 safety rule generation unit
105 safety rule output unit
201 safety rule acceptance unit
202 safety rule storage unit
203 driving control unit
301 scenario input unit
302 control flow generation unit
303 control flow transmission unit

## EP 4 708 248 A1

**Claims**

1. A safety rule generation device, comprising:

   a control flow input unit configured to receive input of a plurality of control flows indicating state transitions of a plurality of moving bodies, respectively, the moving bodies operating in a predetermined scenario;
   a control flow integration unit configured to generate an integrated control flow in which the plurality of control flows are integrated based on transition conditions assigned to the control flows;
   a constraint assignment unit configured to assign logical expression constraints that guarantee safety, to respective states included in the integrated control flow; and
   a safety rule generation unit configured to generate a safety rule based on the logical expression constraints.

2. The safety rule generation device according to claim 1,
   wherein the control flow integration unit is configured to determine transition conditions to be assigned to the states of the integrated control flow such that the plurality of moving bodies have interaction synchronously.

3. The safety rule generation device according to claim 2,
   wherein the interaction includes causal interaction or temporal interaction.

4. The safety rule generation device according to any of claims 1 to 3,
   wherein the control flows are each a control flow graph that includes locations indicating states of a corresponding one of the moving bodies and a directed edge indicating a jump between the locations, and in which a corresponding one of the transition conditions is assigned to the directed edge, the transition condition being defined by an event name.

5. The safety rule generation device according to any one of claims 1 to 3,
   wherein the constraint assignment unit is configured to sequentially assign the logical expression constraints by tracking back the integrated control flow from a final state in the integrated control flow to an initial state in the integrated control flow.

6. The safety rule generation device according to claim 5,
   wherein the safety rule generation unit is configured to generate the safety rule when the logical expression constraints have been assigned to all the states included in the integrated control flow.

7. The safety rule generation device according to claim 6, wherein:
   the logical expression constraints each include a precondition, a control strategy, and a postcondition.

8. The safety rule generation device according to claim 7,
   wherein the logical expression constraints are previously defined such that the precondition being true is the postcondition being true during execution of the control strategy and such that the precondition being true is a predetermined safety condition being true during execution of the control strategy.

9. The safety rule generation device according to claim 7,
   wherein the safety rule generation unit is configured to generate the safety rule by combining the preconditions and the control strategies contained in the logical expression constraints assigned to the integrated control flow, in accordance with the control flows.

10. A moving body, comprising:

   a safety rule storage unit configured to store a safety rule; and
   a driving control unit configured to execute a driving operation in accordance with the safety rule,
   wherein the safety rule is generated based on logical expression constraints, by:

   generating an integrated control flow in which a plurality of control flows indicating state transitions of a plurality of moving bodies operating in a predetermined scenario are integrated based on transition conditions assigned to the control flows; and
   assigning the logical expression constraints that guarantee safety, to respective states included in the integrated control flow.

**11.** An autonomous driving system, comprising: a safety rule generation device; and a moving body capable of autonomous driving,

wherein the safety rule generation device comprises:

a control flow input unit configured to receive input of a plurality of control flows indicating state transitions of a plurality of moving bodies, respectively, the moving bodies operating in a predetermined scenario;
a control flow integration unit configured to generate an integrated control flow in which the plurality of control flows are integrated based on transition conditions assigned to the control flows;
a constraint assignment unit configured to assign logical expression constraints that guarantee safety, to respective states included in the integrated control flow; and
a safety rule generation unit configured to generate a safety rule based on the logical expression constraints, and

wherein the moving body comprises:

a safety rule storage unit configured to store the safety rule; and
a driving control unit configured to execute a driving operation in accordance with the safety rule.

**12.** A safety rule generation method, performed by a computer, comprising:

receiving input of a plurality of control flows indicating state transitions of a plurality of moving bodies, respectively, the moving bodies operating in a predetermined scenario;
generating an integrated control flow in which the plurality of control flows are integrated based on transition conditions assigned to the control flows;
assigning logical expression constraints that guarantee safety, to respective states included in the integrated control flow; and
generating a safety rule based on the logical expression constraints.

**13.** A program causing a computer to:

receive input of a plurality of control flows indicating state transitions of a plurality of moving bodies, respectively, the moving bodies operating in a predetermined scenario;
generate an integrated control flow in which the plurality of control flows are integrated based on transition conditions assigned to the control flows;
assign logical expression constraints that guarantee safety, to respective states included in the integrated control flow; and
generate a safety rule based on the logical expression constraints.

# FIG.1

# FIG.2

# FIG.3

EP 4 708 248 A1

$G^{SVPos}$ for SV's position

SZBeforeCZ
$\dot{x}_{SV} = v_{SV}$

SVEnterCZ
$x_{SV} \geq x_{SV}^{CZStart}$

SZInCZ
$\dot{x}_{SV} = v_{SV}$

SVExitrCZ
$x_{SV} \geq x_{SV}^{CZEnd}$

SZAfterCZ
$\dot{x}_{SV} = v_{SV}$

Init

$G^{SVVel}$ for SV's velocity

SZCruising
$\dot{v}_{SV} = 0$

SVStartBraking

SZBraking
$\dot{v}_{SV} = -b$

SVStop
$v_{SV} \leq 0$

SZStopped
$\dot{v}_{SV} = 0$

Init

$G^{SVTimer}$ for SV's response time

SZTimerRunning
$\dot{t}_{SV} = 1$

SVStartBraking
$t_{SV} \geq \rho$

SZTimerRang
$\dot{t}_{SV} = 1$

Init, $t_{SV} := 0$

FIG.4

$G^{POVPos}$ for POV's position

Init
$x^{max}_{POV}, x^{min}_{POV} := x_{POV}$

POVBeforeCZ
$\dot{x}^{max}_{POV} = v^{max}_{POV}$
$\dot{x}^{min}_{POV} = v^{min}_{POV}$

POVEnterCZ
$x^{max}_{POV} \geq x^{CZStart}_{POV}$

POVInCZ
$\dot{x}^{max}_{POV} = v^{max}_{POV}$
$\dot{x}^{min}_{POV} = v^{min}_{POV}$

POVExitCZ
$x^{max}_{POV} \geq x^{CZEnd}_{POV}$

POVAfterCZ
$\dot{x}^{max}_{POV} = v^{max}_{POV}$
$\dot{x}^{min}_{POV} = v^{min}_{POV}$

$G^{POVVel}$ for POV's velocity

Init
$v^{max}_{POV}, v^{min}_{POV} := v_{POV}$

POVAccelarating
$\dot{v}^{max}_{POV} = a_{max}$
$\dot{v}^{min}_{POV} = -b$

POVStartBraking

POVBraking
$\dot{v}^{max}_{POV} = -b$
$\dot{v}^{min}_{POV} = -b$

POVMinStop
$v^{min}_{POV} \leq 0$

POVMinStMaxBr
$\dot{v}^{max}_{POV} = -b$
$\dot{v}^{min}_{POV} = 0$

POVMinStop
$v^{max}_{POV} \leq 0$

POVMinBrMaxSt
$\dot{v}^{max}_{POV} = a_{max}$
$\dot{v}^{min}_{POV} = 0$

POVStartBraking

POVMaxStop
$v^{max}_{POV} \leq 0$

POVMinBrMaxSt
$\dot{v}^{max}_{POV} = 0$
$\dot{v}^{min}_{POV} = -b$

POVMinStop
$v^{min}_{POV} \leq 0$

POVMaxStop
$v^{max}_{POV} \leq 0$

POVBothSt
$\dot{v}^{max}_{POV} = a_{max}$
$\dot{v}^{min}_{POV} = 0$

$G^{POVTimer}$ for POV's response time

Init

POVNotResponding
$\dot{t}_{POV} = 1$

SVEnterCZ
$t_{POV} := 0$

POVTimerRunning
$\dot{t}_{POV} = 1$

POVStartBraking
$t_{POV} \geq \rho$

POVTimerRang
$\dot{t}_{POV} = 1$

EP 4 708 248 A1

# FIG.5

1

FIG.6

EP 4 708 248 A1

# FIG.7

30

**301** SCENARIO INPUT UNIT

**302** CONTROL FLOW GENERATION UNIT

**303** CONTROL FLOW TRANSMISSION UNIT

10

**101** CONTROL FLOW INPUT UNIT

**102** CONTROL FLOW INTEGRATION UNIT

**103** CONSTRAINT ASSIGNMENT UNIT

**104** SAFETY RULE GENERATION UNIT

**105** SAFETY RULE OUTPUT UNIT

20

**201** SAFETY RULE ACCEPTANCE UNIT

**202** SAFETY RULE STORAGE UNIT

**203** DRIVING CONTROL UNIT

FIG.8

# FIG.9

|  | RSS complying | RSS non-complying |
|---|---|---|
| Experimentally unsafe | 0 | 558 |
| Experimentally safe | 2296 | 62 |

## INTERNATIONAL SEARCH REPORT

| International application No. |
|---|
| **PCT/JP2024/018853** |

| A. | CLASSIFICATION OF SUBJECT MATTER |
|---|---|

*G08G 1/16*(2006.01)i; *B60W 50/00*(2006.01)i
FI: G08G1/16 A; B60W50/00

According to International Patent Classification (IPC) or to both national classification and IPC

| B. | FIELDS SEARCHED |
|---|---|

Minimum documentation searched (classification system followed by classification symbols)

G08G1/16; B60W50/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/231800 A1 (NISSAN NORTH AMERICA, INC.) 03 November 2022 (2022-11-03) paragraphs [0014]-[0095] | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 June 2024** | **09 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/018853**

| Patent document cited in search report | Publication date (day/month/year) | Patent family member(s) | Publication date (day/month/year) |
|---|---|---|---|
| WO 2022/231800 A1 | 03 November 2022 | US 2022/0371612 A1 paragraphs [0014]-[0095] CN 117561192 A | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023090136 A

**Non-patent literature cited in the description**

- **SHAI SHALEV-SHWARTZ** ; **SHAKED SHAMMAH** ; **AMNON SHASHUA**. On a formal model of safe and scalable self-driving cars. *CoRR, abs/1708.06374*, 2017

- **I. HASUO** ; **C. EBERHART** ; **J. HAYDON** ; **J. DUBUT** ; **R. BOHRER** ; **T. KOBAYASHI** ; **S. PRUEKPRA-SERT** ; **X. ZHANG** ; **E. A. PALLAS** ; **A. YAMADA**. Goal-aware RSS for complicated scenarios via program logic. *IEEE Transactions on Intelligent Vehicles, 2023, CoRR abs/2207.02387*